# FASCICULE DE BREVET EUROPEEN

(11) **EP 0 435 704 B1**
(45) Date de publication et mention de la délivrance du brevet: **15.12.1993**
(21) Numéro de dépôt: 90403127.5
(22) Date de dépôt: 06.11.1990
(51) Int. Cl.: B60G 17/04, B60G 17/015

(54) **Suspension de véhicule**
Fahrzeugaufhängung
Vehicle suspension

(30) Priorité: 28.12.1989 FR 8915608
(43) Date de publication de la demande: 03.07.1991
(73) Titulaire: REGIE NATIONALE DES USINES RENAULT S.A., 92109 Boulogne Billancourt Cédex (FR)
(72) Inventeur: Girardi, Philippe, F-95410 Groslay (FR); Berdah, Cathy, F-75011 Paris (FR)

(56) Documents cités:
- EP-A- 0 047 209
- EP-A- 0 142 947
- EP-A- 0 148 060
- AU-A- 522 455
- DE-B- 1 129 845
- US-A- 3 533 425
- PATENT ABSTRACTS OF JAPAN vol. 9, no. 242 (M-417)(1965) 28 septembre 1985,& JP-A-60 94810 (SUZUKI) 28 mai 1985,

## Description

La présente invention est relative à une suspension de véhicule, du type dit "suspension active".

La plupart des véhicules sont équipés d'une suspension dite passive, constituée de moyens élastiques intercalés entre la caisse du véhicule et les roues, disposés en parallèle avec des amortisseurs, qui sont fréquemment du type constitué d'un cylindre rempli de fluide, dans lequel se déplace un piston pourvu d'orifices calibrées et solidaire d'une tige reliée à une des extrémités de la suspension.

Depuis longtemps, on a désiré agir sur les caractéristiques de la suspension pour l'adapter aux circonstances liées au déplacement, c'est-à-dire "gérer" les efforts transmis à la caisse. Une adaptation par commande manuelle a été proposée il y a une cinquantaine d'années, mais la tendance actuelle est de commander automatiquement cette adaptation en fonction de signaux émis par des capteurs sensibles aux circonstances du déplacement. On connaît des systèmes où l'amortisseur est remplacé par un vérin hydraulique, générant des efforts entre le châssis du véhicule et les roues, tels que l'on arrive, par des lois de pilotage appropriées, à augmenter le confort ou les qualités routières dans des proportions considérables. L'inconvénient de tels systèmes est qu'ils nécessitent des apports d'énergie importants, souvent non négligeables devant la puissance du moteur thermique d'entraînement de véhicule.

On connaît des systèmes moins perfectionnés, où l'on agit sur le dispositif amortisseur. Ces systèmes sont néanmoins compliqués et obligent à des modifications importantes de la structure de la suspension.

La présente invention a pour but de fournir une suspension active qui consomme très peu d'énergie et qui soit simple et peu coûteuse.

Pour obtenir ce résultat, l'invention fournit une suspension de véhicule, comprenant, entre la caisse du véhicule et une roue, un premier ressort et un amortisseur disposés en parallèle, la suspension comprenant en outre des moyens pour gérer les efforts transmis à la caisse en fonction de paramètres liés aux conditions extérieures telles que vitesse, charge du véhicule, état du sol, etc.., qui présente pour particularité que les moyens pour parvenir à cette gestion des efforts comprennent un second ressort et un vérin commandé, disposés en parallèle, l'ensemble formé par le second ressort et ce vérin étant disposé en série par rapport à l'ensemble formé par le premier ressort et l'amortisseur.

De préférence, le vérin commandé est un vérin hydraulique, et le second ressort est un ressort à gaz.

Dans le cas où l'amortisseur est un amortisseur oléo-pneumatique comportant un cylindre fermé à l'intérieur duquel peut se déplacer un piston dont la tige sort du cylindre, on prévoit avantageusement que le piston du vérin est solidaire de la paroi du cylindre, et le ressort à gaz comprend un chambre de volume variable, remplie de gaz, et dont une paroi est constituée par un fond dudit cylindre.

L'invention va être exposée de façon plus détaillée à l'aide d'exemples pratiques, illustrés avec les dessins, parmi lesquels:

Figure 1 est un schéma théorique d'une suspension de l'art antérieur.

Figure 2 est un schéma analogue de la suspension de l'invention.

Figure 3 est une coupe axiale partielle simplifiée d'une suspension selon l'invention.

Figure 4 est une vue analogue à la figure 3 relative à une autre suspension selon l'invention.

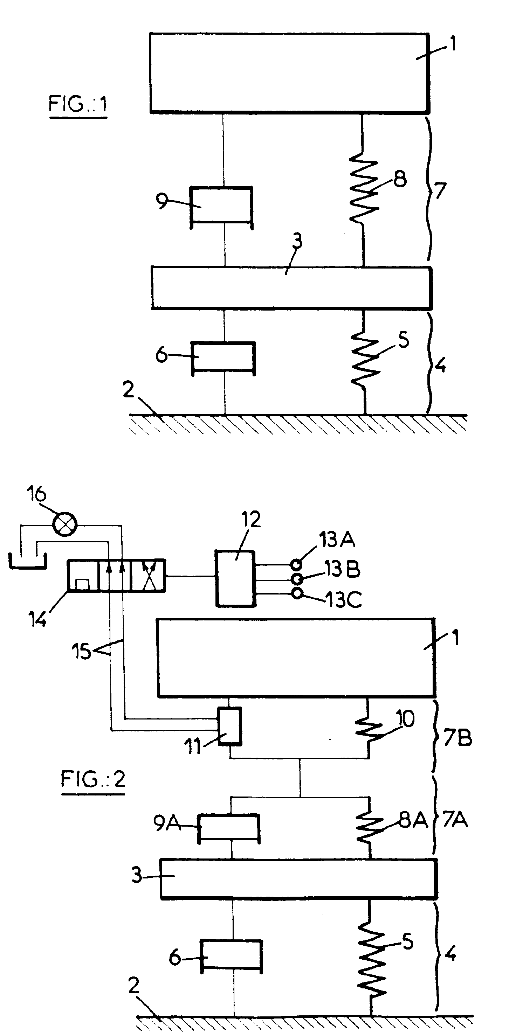

La figure 1 montre un châssis de véhicule 1, qui constitue une masse suspendue, relié au sol 2 par l'intermédiaire d'une roue 3, qui constitue avec ses accessoires: fusée, moyeu, etc.. ce qu'on appelle habituellement une masse non suspendue. La roue 3 est séparée du sol par le pneumatique 4, qu'on peut schématiquement considérer comme équivalent à un ressort 5 et à un amortisseur 6. La masse d'air contenue dans le pneumatique constitue l'essentiel du ressort 5, cependant que le caoutchouc de l'enveloppe, par ses propriétés d'absorption des vibrations, constitue l'essentiel de l'amortisseur 6. La roue est reliée au châssis 1 du véhicule par ce qu'on appelle habituellement la suspension 7, et qui peut, elle aussi, être assimilée à la combinaison d'un ressort 8 et d'un amortisseur 9 disposés en parallèle.

Sur la plupart des véhicules, il n'est pas possible d'intervenir sur les caractéristiques de la suspension 7, et celle-ci est dite passive. Les suspensions pilotées actuellement proposées agissent généralement sur les propriétés d'amortissement de la partie amortisseur 9 de la suspension 7.

Si on se reporte maintenant à la figure 2, on retrouve le châssis de véhicule 1, la roue 3 et le pneu 4, mais la suspension 7 est divisée en deux parties: une partie 7A, constituée d'un ressort 8A et d'un amortisseur 9A, comme la suspension 7 de l'art antérieur, et une partie active 7B, constituée d'un ressort 10 et d'un vérin hydraulique 11 disposés en parallèle. Les parties 7A et 7B de la suspension sont disposées en série entre la masse suspendue 1 et la masse suspendue 3. Sur la figure 2, on a représenté la partie passive 7A reliée à la masse non suspendue, et la partie active 7B reliée à la masse suspendue. Cette disposition peut être inversée sans inconvénient.

Le vérin commandé 11 est relié à un organe de commande 12, conçu comme un micro-ordinateur et relié à des capteurs dont seuls certains 13A, 13B, 13C ont été représentés. Cet organe de commande agit sur un commutateur hydraulique 14 qui envoie un fluide de travail par des conduits 15 depuis une pompe 16 jusqu'au vérin commandé 11, pour l'amener en position d'extension ou de rétraction ou pour le maintenir dans une position intermédiaire convenable, dépendant des paramètres de marche détectés par les capteurs. Ces paramètres de marche peuvent être, notamment, la vitesse, l'accélération, la charge, l'angle des roues directrices avec l'axe du véhicule et la vitesse de variation de cet angle, etc.. Les variations de longueur du vérin commandé 11 agissent, comme la figure 2 le montre, sur la force du ressort 10, et modifient ainsi les caractéristiques de l'ensemble de la suspension 7A, 7B.

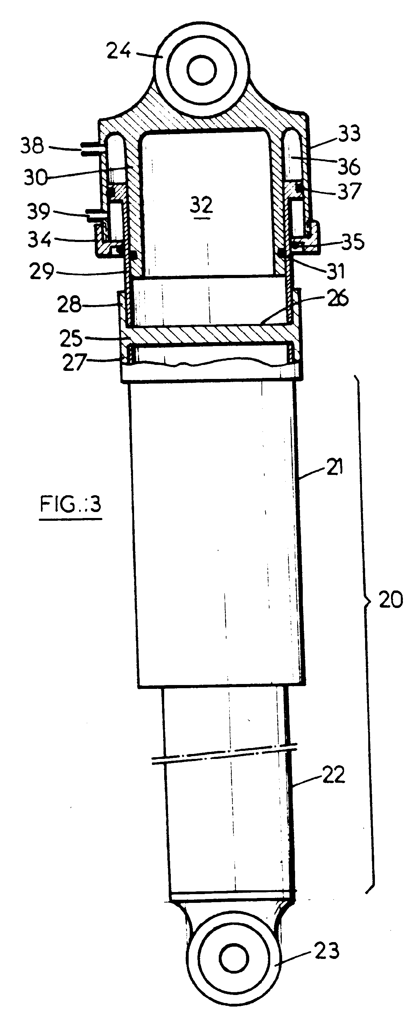

L'exemple de réalisation décrit à la figure 3 comprend un ensemble combiné formé d'un ressort et d'un amortisseur oléo-pneumatique 20, de type classique. On sait que de tels ensembles combinés comportent, entre autres, un cylindre fermé à l'intérieur duquel peut se déplacer un piston dont la tige sort du cylindre, et, vus de l'extérieur, se présentent sous la forme de deux pièces cylindriques 21, 22, conçues pour coulisser télescopiquement l'une dans l'autre et pourvues, à leurs extrémités opposées, de moyens de fixation 23, 24, représentés par des oeillets sur la figure, pour relier l'ensemble d'une part au châssis du véhicule, et d'autre part, à la fusée de roue.

Selon la présente invention, l'une des fixations 24 n'est pas reliée directement à la partie cylindrique 21 correspondante, mais un certain nombre de pièces, qui font partie de la suspension active selon l'invention, sont intercalées entre ces deux éléments.

Une pièce intermédiaire 25 est constituée d'un "plancher" 26, en forme de disque plein, solidaire sur ses bords de deux parties cylindriques opposées 27, 28. La partie 27 est liée, par filetage ou autrement, à la partie cylindrique 21 du combiné oléo-pneumatique. Un cylindre 29 est fixé sur l'autre partie cylindrique 28, de façon étanche. Une cloche 30, solidaire de la fixation 24, peut coulisser à l'intérieur du cylindre 29, l'étanchéité avec ce cylindre étant assurée par un joint torique 31. La cloche 30 constitue avec le cylindre 29 et le plancher 26 une chambre fermée 32 gui est remplie d'un gaz sous pression.

A sa périphérie extérieure, la cloche 30 porte une jupe 33, coaxiale à la cloche, et de diamètre supérieur. L'espace entre la jupe 33 et la cloche 30 est fermé par un écrou 34, qui est en contact étanche avec le cylindre 29, grâce à un joint torique 35. La chambre 36 ainsi délimitée entre la jupe 33 et la cloche 30 contient un piston annulaire constitué par un flasque 37, solidaire du cylindre 29. Des conduits 38, 39 permettent d'envoyer un fluide hydraulique d'un côté ou l'autre du piston annulaire 37. On conçoit que, selon la position du piston annulaire 37 dans la chambre 36 définie par la jupe 33 et la cloche 30, l'extension dans le sens axial de la chambre 32 peut être réglée à volonté. Comme le volume de gaz contenu dans cette chambre est constant, on peut ainsi faire varier sa pression. La masse de gaz contenue dans la chambre 32 constitue le ressort 10 mentionné à propos de la figure 2, et le piston annulaire 37 constitue le piston du vérin commandé 11 prévu à la même figure.

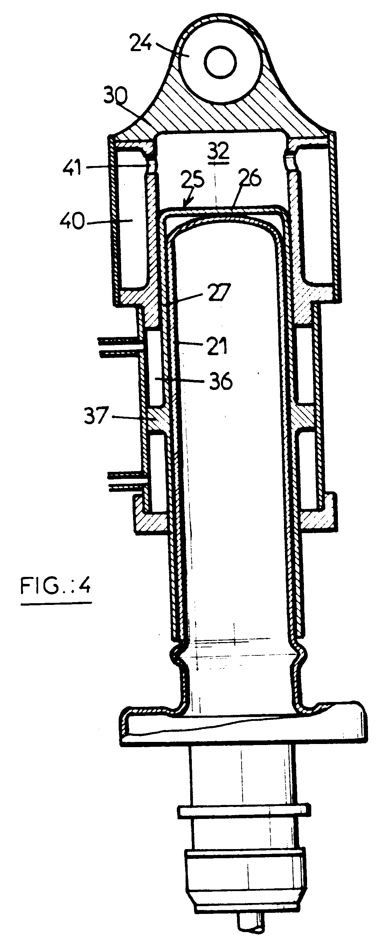

La réalisation de la figure 4 est analogue dans son principe à celle de la figure 3 et n'en diffère que par la disposition relative des divers éléments. Sur ces deux figures, les éléments analogues portent les mêmes références.

La pièce intermédiaire 25 a une forme différente de celle de la figure 3. En effet, elle est formée d'un plancher 26 et d'un seul cylindre 27 qui entoure la partie cylindrique correspondante d'un ensemble constitué d'un ressort hélicoïdal (non représenté) et d'un amortisseur de type classique, qui exerce ici les fonctions de l'amortisseur oléo-pneumatique de la figure 3. La cloche 30, au lieu de pénétrer à l'intérieur d'une partie cylindrique 28, coulisse autour de la partie cylindrique 27. Elle porte deux jupes successives, qui déterminent deux chambres séparées, isolées l'une par rapport à l'autre. Une première chambre 40 est reliée par des alésages 41 à la chambre à gaz 32 et constitue pour celle-ci un volume additionnel. Le piston annulaire 37, dans la chambre 36 déterminée par la deuxième jupe et la partie cylindrique 27, située à peu près en prolongement de la chambre 40, est porté par la partie cylindrique 27.

Le fonctionnement des dispositifs des figures 3 et 4 est identique. La disposition de la figure 4 permet une construction plus courte, dans la direction axiale, de l'ensemble formé par les suspensions active et passive.

Un avantage particulier dans les deux cas est que l'on peut utiliser, pour la suspension passive, un ensemble formé d'un ressort et d'un amortisseur oléo-pneumatique, ou de type classique, du commerce. Bien entendu, il n'est pas possible d'utiliser dans la suspension de l'invention exactement le même ensemble ressort-amortisseur que celui qui aurait été utilisé en l'absence de suspension active: la longueur des ensembles est différente, et surtout la présence du ressort pneumatique de force variable constitué par le gaz contenu dans la chambre 32, complétée éventuellement par le volume additionnel 40, entraîne une adaptation de l'ensemble de la suspension. Cela n'empêche pas, cependant, d'utiliser un ensemble ressort-amortisseur du commerce, sur lequel on viendra "greffer" la chambre 32. La suspension active procurée par l'invention permet un large appel à des composants du commerce, et donc d'un prix de revient particulièrement réduit.

On observera que, tant que le vérin commandé n'est pas actionné, la suspension conserve les propriétés d'une suspension passive courante, si bien que la seule consommation d'énergie nécessaire est celle qui est utilisée pour actionner le vérin commandé lorsque les situations rencontrées pr le véhicule le justifient. Il n'y a aucune consommation d'énergie en dehors de ces moments.

## Revendications

1. Suspension de véhicule, comprenant, entre la caisse du véhicule et une roue, un premier ressort (8) et un amortisseur (9) disposés en parallèle, la suspension comprenant en outre des moyens pour gérer les efforts transmis à la caisse en fonction de paramètres liés aux conditions extérieures telles que vitesse, charge du véhicule, état du sol, etc..,
caractérisée en ce que les moyens pour gérer les efforts transmis à la caisse comprennent un second ressort (10) et un vérin commandé (11), disposés en parallèle, l'ensemble (7B) formé par le second ressort et ce vérin étant disposé en série par rapport à l'ensemble (7A) formé par le premier ressort et l'amortisseur.

2. Suspension selon la revendication 1, caractérisée en ce que le vérin commandé (11) est un vérin hydraulique, et le second ressort est un ressort à gaz (10).

3. Suspension selon la revendication 2, dans laquelle l'amortisseur est un amortisseur oléo-pneumatique ou de type classique comportant un cylindre fermé à l'intérieur duquel peut se déplacer un piston dont la tige sort du cylindre, caractérisée en ce que le piston (37) du vérin commandé (11) est solidaire de la paroi du cylindre (21), et le ressort à gaz comprend une chambre (32) de volume variable, remplie de gaz, et dont une paroi est constituée par un fond dudit cylindre.

4. Suspension selon la revendication 3, caractérisée en ce qu'elle comprend une pièce annulaire (37), solidaire de la paroi du cylindre de l'amortisseur (21), qui peut se déplacer avec étanchéité dans une chambre annulaire qui entoure ledit cylindre et qui est fixe par rapport à une extrémité de la suspension, cette chambre annulaire (36) étant relié à une source de pression hydraulique (16) par l'intermédiaire de moyens de commande (12, 14) de façon à constituer ledit vérin hydraulique commandé.

5. Suspension selon l'une des revendications 3 ou 4, comprenant une chape intercalée entre l'amortisseur et une extrémité de la suspension, caractérisée en ce que la chape présente une première cavité cylindrique (32) à l'intérieur de laquelle peut se déplacer, avec étanchéité, une extrémité de l'amortisseur, cette cavité étant remplie d'un gaz sous pression pour constituer le ressort (10), et la chape présente une deuxième cavité (36) dans laquelle se déplace le piston (37) du vérin commandé, solidaire de la paroi du cylindre (21) de l'amortisseur.

## Patentansprüche

1. Fahrzeugaufhängung, bei der zwischen der Fahrzeugkarosserie und einem Rad eine erste Feder (8) und ein parallel dazu angeordneter Stoßdämpfer (9) vorgesehen sind und die außerdem eine Anordnung zur Aufnahme der der Karosserie übertragenen Kräfte aufweist als Funktion von Parametern, die mit äußeren Bedingungen verbunden sind, wie Geschwindigkeit, Fahrzeugbeladung, Strassenzustand etc., dadurch gekennzeichnet, daß die Anordnung zur Aufnahme der der Karosserie übertragenen Kräfte eine zweite Feder (10) und einen steuerbaren Druckzylinder (11) aufweist, die parallel angeordnet sind, wobei die durch die zweite Feder und diesen Druckzylinder gebildete Anordnung (7b) in Serie bezüglich der Anordnung (7a) angeordnet ist, welche durch die erste Feder und den Stoßdämpfer gebildet ist.

2. Aufhängung nach Anspruch 1, dadurch gekennzeichnet, daß der steuerbare Druckzylinder (11) ein hydraulischer Druckzylinder ist und daß die zweite Feder eine Gasfeder (10) ist.

3. Aufhängung nach Anspruch 2, bei welcher der Stoßdampfer ein Öl-Druckluft-Stoßdämpfer oder ein klassischer Stoßdämpfer ist mit einem geschlossenen Zylinder, in dessen Innerem ein Kolben verschiebbar ist, dessen Kolbenstange aus dem Zylinder herausragt, dadurch gekennzeichnet, daß der Kolben (37) des steuerbaren Druckzylinders (11) mit der Wand des Zylinders (21) fest verbunden ist und daß die Gasfeder eine volumenvariable gasgefüllte Kammer (32) aufweist, wobei eine Wand durch den Boden des Zylinders gebildet wird.

4. Aufhängung nach Anspruch 3, dadurch gekennzeichnet, daß sie ein ringförmiges Teil (37) aufweist, das mit der Zylinderwand des Stoßdämpfers (21) fest verbunden ist, das in dichter Weise in einer ringförmigen Kammer, welche diesen Zylinder umgibt, verschiebbar ist und welche bezüglich eines Endes der Aufhängung feststeht, wobei die ringförmige Kammer (36) mit einer hydraulischen Druckquelle (16) mittels einer Steueranordnung (12, 14) derart verbunden ist, daß der steuerbare hydraulische Druckzylinder gebildet wird.

5. Aufhängung nach einem der Ansprüche 3 oder 4, mit einer zwischen dem Stoßdampfer und einem Ende der Aufhängung angeordneten Abdeckung, dadurch gekennzeichnet, daß die Abdeckung einen ersten zylindrischen Hohlraum (32) aufweist, in dessen Inneren in dichter Weise ein Ende des Stoßdämpfers verschiebbar ist, wobei dieser Hohlraum mit einem Gas unter Druck gefüllt ist, um so die Feder (10) zu bilden, und daß die Abdeckung einen zweiten Hohlraum (36) aufweist, in welchem der Kolben (37) des steuerbaren Druckzylinders verschiebbar ist, welcher fest mit der Wand des Zylinders (21) des Stoßdämpfers verbunden ist.

## Claims

1. A vehicle suspension comprising, between the body of the vehicle and a wheel, a first spring (8) and a damper (9) which are disposed in parallel, the suspension further comprising means for controlling the forces transmitted to the body in dependence on parameters which are linked to the external conditions such as speed, load of the vehicle, state of the ground, etc ..., characterised in that the means for controlling the forces transmitted to the body comprise a second spring (10) and a controlled jack (11) which are disposed in parallel, the assembly (7B) formed by the second spring and said jack being disposed in series with respect to the assembly (7A) formed by the first spring and the damper.

2. A suspension according to claim 1 characterised in that the controlled jack (11) is a hydraulic jack and the second spring is a gas spring (10).

3. A suspension according to claim 2 wherein the damper is an oleo-pneumatic damper or a damper of conventional type comprising a closed cylinder, in the interior of which can be displaced a piston whose rod projects from the cylinder, characterised in that the piston (37) of the controlled jack (11) is fixed with respect to the wall of the cylinder (21) and the gas spring comprises a variable-volume chamber (32) which is filled with gas and of which a wall is formed by an end portion of said cylinder.

4. A suspension according to claim 3 characterised in that it comprises an annular portion (37) fixed with respect to the wall of the cylinder of the damper (21), which can be displaced in sealing relationship in an annular chamber which surrounds said cylinder and which is fixed with respect to an end of the suspension, said annular chamber (36) being connected to a hydraulic pressure source (16) by way of control means (12, 14) so as to constitute said controlled hydraulic jack.

5. A suspension according to one of claims 3 and 4 comprising a cap interposed between the damper and an end of the suspension characterised in that the cap has a first cylindrical cavity (32) in the interior of which an end of the damper can be displaced in sealing relationship, said cavity being filled with a gas under pressure to constitute the spring (10), and the cap has a second cavity (36) in which the piston (37) of the controlled jack, being fixed with respect to the wall of the cylinder (21) of the damper, is displaced.
